# EUROPÄISCHE PATENTSCHRIFT

(11) **EP 3 529 526 B1**
(45) Veröffentlichungstag und Bekanntmachung des Hinweises auf die Patenterteilung: **06.10.2021**
(21) Anmeldenummer: 17780303.8
(22) Anmeldetag: 21.09.2017
(51) Int. Cl.: F16L 25/00, F16L 25/06, F16L 37/084, F16L 37/086, F16L 37/088, F16L 37/091, F16L 37/092, F16L 37/12, F16L 37/138, F16L 37/16, F16L 37/22, F17C 1/00

(54) **BEFÜLLEINRICHTUNG ZUM BEFÜLLEN EINES FLUIDSPEICHERS SOWIE VORRICHTUNG ZUM KUPPELN DER BEFÜLLEINRICHTUNG MIT EINEM BEFÜLLKANAL DES FLUIDSPEICHERS**
FILLING DEVICE FOR FILLING A FLUID RESERVOIR, AND DEVICE FOR COUPLING THE FILLING DEVICE TO A FILLING DUCT OF THE FLUID RESERVOIR
DISPOSITIF DE REMPLISSAGE SERVANT À REMPLIR UN RÉSERVOIR DE FLUIDE AINSI QUE DISPOSITIF SERVANT À ACCOUPLER LE DISPOSITIF DE REMPLISSAGE À UN CONDUIT DE REMPLISSAGE DU RÉSERVOIR DE FLUIDE

(30) Priorität: 21.10.2016 DE 102016012635
(43) Veröffentlichungstag der Anmeldung: 28.08.2019
(73) Patentinhaber: Sat Anlagentechnik GmbH, 25578 Dägeling (DE)
(72) Erfinder: LASS, Reiner, 25832 Tönning (DE)
(74) Vertreter: Weidner Stern Jeschke
(86) Internationale Anmeldenummer: PCT/EP2017/001122
(87) Internationale Veröffentlichungsnummer: WO 2018/072861

(56) Entgegenhaltungen:
- DE-A1- 10 212 735
- GB-A- 1 138 359
- GB-A- 2 174 468
- JP-U- S52 140 502

## Beschreibung

Die Erfindung betrifft eine Vorrichtung zum Kuppeln einer Befülleinrichtung mit einem Befüllkanal eines Fluidspeichers gemäß dem Oberbegriff des Patentanspruchs 1, sowie eine mit einer solchen Vorrichtung ausgestattete Befülleinrichtung zum Befüllen eines Fluidspeichers gemäß Patentanspruch 13. Die Erfindung betrifft insbesondere eine Befülleinrichtung zum Einfüllen von Betriebsmitteln, wie Kühlerflüssigkeit, eine Harnstofflösung, Kältemittel, Scheibenwaschwasser oder Bremsflüssigkeit in einen Fluidspeicher in Form eines zugehörigen Betriebsmittel-Behälters oder Kreislaufs eines Kraftfahrzeugs, speziell bei der erstmaligen Befüllung nach der Fertigung des Kraftfahrzeugs.

Bei der erstmaligen Befüllung eines Betriebsmittel-Behälters oder Kreislaufs eines Kraftfahrzeugs wird häufig die zuvor im Behälter oder Kreislauf enthaltene Luft abgesaugt, um diesen vollständig zu evakuieren, so dass das Betriebsmittel keine Luft enthalten kann. Außerdem trägt der bei der Absaugung erzeugte Unterdruck dazu bei, das Betriebsmittel aus der Befülleinrichtung in den Fluidspeicher zu saugen. Dazu wird die Befülleinrichtung mit einem Befüllkanal verbunden, der sich gewöhnlich durch einen verschließbaren Füllstutzen oder Füllnippel ins Innere des Fluidspeichers erstreckt. Um beim Absaugen der Luft einen Zutritt von Umgebungsluft in den Behälter zu vermeiden, muss einerseits die Befülleinrichtung mindestens axial unbeweglich auf dem Fluidspeicher fixiert und andererseits der mit der Befülleinrichtung kommunizierende Befüllkanal gegenüber der Umgebung abgedichtet werden.

Eine auf dem Fachgebiet auch als Befülladapter bezeichnete Befülleinrichtung und eine auch als Kupplungs-, Spann- oder Verriegelungsvorrichtung bezeichnete Fixiervorrichtung der eingangs genannten Art sind zum Beispiel aus der EP 1 836 430 B1 bekannt. Die Fixiermittel dieser Fixiervorrichtung bestehen aus mehreren gelenkig gelagerten Spannklauen, die sich durch eine lineare Vorschubbewegung von pneumatisch aktivierten Betätigungsmitteln von außen her mit der Umfangswand eines Füllstutzens oder Füllnippels des Fluidspeichers in Eingriff bringen und nach der Befüllung durch Zurückziehen der Betätigungsmittel wieder aus dem Eingriff mit der Umfangswand ausrücken lassen. Die Dichtmittel umfassen eine Flachdichtung, die durch die Vorschubbewegung der Betätigungsmittel gegen die Stirnfläche des Füllstutzens angepresst wird. Da die Abmessungen der Spannklauen und weiterer Bauteile der Fixiervorrichtung genau auf das Profil und den Durchmesser der Außenwand des Füllstutzens oder Füllnippels abgestimmt werden müssen, eignet sich die bekannte Vorrichtung jedoch nicht zur Verwendung mit Füllstutzen oder Füllnippeln, die etwas andere Abmessungen oder Profile bzw. größere Toleranzen aufweisen.

Die JP S52 140502 U offenbart bereits eine Vorrichtung und eine Befülleinrichtung der eingangs genannten Art, die zum Befüllen eines Fahrzeugreifens dient. Der Klemmring besteht dort aus zwei Hälften mit einer Nut, in die ein einteiliger, mit einer Unterbrechung versehener Federring aus Federstahl eingesetzt ist. Der Federring wird elastisch verformt, wenn die Hälften des Klemmrings durch den Vorschub der Betätigungsmittel aneinander angenähert werden, und drückt die Hälften wieder auseinander, nachdem die Betätigungsmittel zurückgezogen worden sind.

Die GB 1 138359 A offenbart eine gas- oder unterdruckbetätigte Kupplung, die sich mit einem Auslassnippel eines Gasspeichers kuppeln lässt. Zur Verriegelung mit dem Nippel umfasst die Kupplung ein Paar Verriegelungselemente mit Zähnen, die sich in zwei entgegengesetzten Öffnungen einer den Nippel aufnehmenden Buchse frei in radialer Richtung bewegen können. In der Verriegelungsstellung sind die Verriegelungselemente blockiert und ragen mit ihren Zähnen in die Buchse, wobei die Zähne mit einem Außengewinde des Nippels in Eingriff stehen. Wenn die Kupplung durch Herausziehen des Nippels aus der Buchse gelöst wird, werden die Verriegelungselemente durch Zusammenwirken der schrägen Flanken der Zähne und des Gewindes radial aus der Öffnung herausbewegt und dabei aus dem Eingriff mit dem Gewinde ausgerückt,

Die GB 2 174 468 A und die DE 102 12 735 A1 offenbaren Rohrschnellkupplungen zum dauerhaften Verbinden von zwei Rohrabschnitten durch Einstecken des einen Rohrabschnitts in den anderen. Zum Festhalten des eingesteckten Rohrabschnitts enthält die Kupplung einen einteiligen Klemm- oder Spannring mit einer einzigen Unterbrechung und einer konischen äußeren Begrenzungsfläche.

Ausgehend hiervon liegt der Erfindung die Aufgabe zugrunde, bei einer Vorrichtung der eingangs genannten Art die Anzahl der Teile des Klemmrings und die Anzahl der für eine Fixierung auf Wänden von Füllstutzen oder Füllnippeln mit unterschiedlichen Durchmessern und/oder unterschiedlichen Profilen erforderlichen Klemmring-Typen zu reduzieren und damit die Herstellungs- und Lagerhaltungskosten zu senken und trotzdem für einen sicheren Halt zu sorgen, eine über die Länge des Klemmrings gleichmäßige Rückverformung und damit ein sicheres selbsttätiges Ausrücken aus dem Eingriff mit der Wand des Befüllkanals zu gewährleisten, sowie einen Austausch des Klemmrings zu erleichtern.

Zur Lösung dieser Aufgabe wird erfindungsgemäß die Merkmalskombination des Anspruchs 1 vorgeschlagen.

Bei der elastischen Verformung des Klemmrings ändert sich mit dem Durchmesser auch der Krümmungsradius des Klemmrings, wobei sich der letztere an den Krümmungsradius der Wand anpasst, so dass der Klemmring über einen Großteil des Umfangs der Wand gegen diese angepresst wird, was für einen guten Halt des Klemmrings sorgt.

Durch eine entsprechende Ausgestaltung des Klemmrings, des Widerlagers und der Betätigungsmittel lässt sich die erfindungsgemäße Fixiervorrichtung sowohl von außen her als auch von innen her mit der Wand in Eingriff bringen, die den Befüllkanal umgibt. Im zuerst genannten Fall wird der Klemmring durch den Vorschub der Betätigungsmittel unter Verkleinerung seines Durchmessers gegen den äußeren Umfang der Wand angepresst, während er im zuletzt genannten Fall durch den Vorschub der Betätigungsmittel unter Vergrößerung seines Durchmessers gegen den inneren Umfang der Wand angepresst wird, um ihn mit dieser in Eingriff zu bringen.

Im Rahmen der vorliegenden Patentanmeldung bedeutet der Begriff "einteiliger Klemmring", dass dieser in Umfangsrichtung nur eine einzige Unterbrechung aufweist, an der sich die beiden Enden des Klemmrings gegenüberliegen. Dazwischen erstreckt sich der Klemmring ohne Unterbrechung nahezu um den gesamten äußeren oder inneren Umfang der Wand herum, vorteilhaft über einen Winkel von mehr als 270 Grad, bevorzugt von mehr als 300 Grad und am besten von mehr als 320 Grad. In radialer und/oder axialer Richtung muss der Klemmring aber nicht notwendigerweise einteilig ausgebildet sein, sondern kann auch aus zwei oder mehr ringförmigen Teilen bestehen, die in Umfangsrichtung jeweils eine einzige Unterbrechung aufweisen und bevorzugt fest oder lose miteinander verbunden sind.

Bei der Wand muss es sich nicht notwendigerweise um die Wand des eigentlichen Befüllkanals handeln. Stattdessen kann der Klemmring auch mit einer Wand in Eingriff gebracht werden, die einen Füllstutzen im radialen Abstand umgibt und ein Innengewinde zum Einschrauben eines Verschlussdeckels aufweist, wie dies bei einigen Behältern für Kühlerflüssigkeit der Fall ist.

Ein weiterer Vorteil der erfindungsgemäßen Fixiervorrichtung besteht darin, dass der Klemmring gemäß der Erfindung durch elastische Rückverformung selbsttätig aus dem Eingriff mit der Wand ausrückt, wenn nach dem Befüllen des Fluidspeichers die Betätigungsmittel zum Lösen der Fixiervorrichtung
zurückgezogen werden. Dadurch ist es nicht notwendig, die Betätigungsmittel mit dem Klemmring zu verbinden, so dass dieser mit Vorteil schwimmend oder lose zwischen die Betätigungsmittel und das Widerlager eingesetzt werden kann. Bei Bedarf kann der Klemmring zudem sehr einfach ausgetauscht werden, da bei entsprechender Dimensionierung der Unterbrechung in der Umfangsrichtung des Klemmrings der letztere unter elastischer Verformung so stark aufgeweitet bzw. zusammengedrückt werden kann, dass er sich am Widerlager vorbeibewegen lässt.

Die Erfindung sieht vor, dass der elastisch verformbare Klemmring aus einem geeigneten Kunststoffmaterial mit elastischen Eigenschaften besteht, wie zum Beispiel Polymethylen (POM), Polyvinylchlorid (PVC) oder Polypropylen (PP). Ein solcher Klemmring kann relativ einfach durch Spritzgießen gefertigt werden, oder durch drehende Bearbeitung und anschließendes Ausfräsen der Unterbrechung. Zur Verschleißminderung kann der Klemmring jedoch neben dem Kunststoffring noch einen Metallring umfassen, der mit der Wand in Eingriff tritt, an derselben Stelle wie der Kunststoffring eine einzige Unterbrechung aufweist und zweckmäßig formschlüssig in eine umlaufende nutartige Vertiefung des Kunststoffrings eingesetzt ist, um ihn mit diesem zu verbinden.

Ein besonders sicherer Eingriff des Klemmrings mit der Wand wird erreicht, wenn der Klemmring oder sein Metalleinsatz gemäß einer bevorzugten Ausgestaltung der Erfindung mindestens eine zur Wand hin überstehende Rippe aufweist, die bei vorgeschobenen Betätigungsmitteln und verformtem Klemmring einen über die Wand überstehenden Bund hintergreift oder zwischen benachbarte Gewindeflanken eines in die Wand eingeformten Außen- oder Innengewindes eingreift. Damit wird der Eingriff mit der Wand formschlüssig, so dass sich die Fixiervorrichtung in axialer Richtung nicht mehr von der Wand abziehen lässt.

Die Rippe kann entweder radial über den Klemmring überstehen, zum Beispiel wenn sie einen über die Wand überstehenden Bund hintergreifen soll, oder die Form von einem oder mehreren Abschnitten einer Helix oder Wendel besitzen, zum Beispiel wenn sie mit einem in die Wand eingeformten Außen- oder Innengewinde in Eingriff treten soll.

Bei Fixiervorrichtungen, die zur Fixierung an der Außenseite einer Wand bestimmt sind, mit der sich der Klemmring von außen her in Eingriff bringen lässt, sieht eine weitere vorteilhafte Ausgestaltung der Erfindung vor, dass sich im unverformten Ruhezustand des Klemmrings dessen Unterbrechung über einen Umfangswinkel von mehr als 10 Grad, zweckmäßig mehr als 20 Grad und vorzugsweise von mehr als 30 Grad erstreckt. Dadurch lässt sich derselbe Klemmring bei Fixiervorrichtungen für einen verhältnismäßig großen Bereich von Wänden von Füllstutzen mit unterschiedlichen Außendurchmessern einsetzen, wobei er je nach Außendurchmesser der Wand mehr oder weniger stark elastisch zusammengedrückt wird.

Bei Fixiervorrichtungen, die zur Fixierung an der Innenseite einer Wand bestimmt sind, mit der sich der Klemmring von innen her in Eingriff bringen lässt, sieht eine andere vorteilhafte Ausgestaltung der Erfindung vor, dass im unverformten Zustand des Klemmrings dessen Enden beiderseits der Unterbrechung gegeneinander anliegen oder allenfalls einen schmalen Spalt begrenzen, während sie bei vorgeschobenen Betätigungselement in Umfangsrichtung einen Winkelabstand von mehr als 30 Grad und vorzugsweise von mehr als 40 Grad aufweisen. Dies gestattet es, den Klemmring bei Fixiervorrichtungen für einen verhältnismäßig großen Bereich von Füllstutzen mit unterschiedlichen Innendurchmessern einzusetzen, wobei der Klemmring zum Eingriff mit der Wand mehr oder weniger stark elastisch geweitet wird.

Um zu erreichen, dass sich der Durchmesser des Klemmrings beim Anpressen gegen das Widerlager verändert, sind der Klemmring einerseits und die Betätigungsmittel und/oder das Widerlager andererseits bevorzugt mit zusammenwirkenden konischen Oberflächen versehen, die vorteilhafterweise als komplementärer Innen- und Außenkonus mit entsprechendem Neigungswinkel am Klemmring bzw. an den Betätigungsmitteln und/oder am Widerlager ausgebildet sind, so dass sie flächig gegeneinander anliegen, wenn die Betätigungsmittel den Klemmring gegen das Widerlager drücken.

Da sich der Klemmring sowohl in unverformtem Zustand als auch in verformtem Zustand auf dem Widerlager abstützten muss, darf der Klemmring insbesondere dann nicht zu schmal sein, wenn die Befülleinrichtung auf Wänden mit unterschiedlichen Durchmessern fixiert werden soll. Da sich jedoch andererseits relativ breite Klemmringe schlechter verformen lassen, kann es in diesem Fall von Vorteil sein, Einkerbungen im Klemmring vorzusehen, die dessen elastische Verformung erleichtern, ohne dass die Breite des Klemmrings verkleinert werden muss.

Versuche haben gezeigt, dass zur elastischen Verformung des Klemmrings durch die Betätigungsmittel eine verhältnismäßig hohe Anpresskraft aufgebracht werden muss, wenn sowohl der Klemmring als auch ein gegenüberliegendes Andruckelement der Betätigungsmittel bzw. das Widerlager durchgehende konische Oberflächen aufweisen, die sich vollständig oder nahezu vollständig um den gesamten Umfang des Klemmrings und des Andruckelements bzw. Widerlagers herum erstrecken. Jedoch kann überraschenderweise die Anpresskraft erheblich reduziert werden, wenn gemäß einer weiteren vorteilhaften Ausgestaltung der Erfindung eine von den zusammenwirkenden konischen Oberflächen aus mehreren in Umfangsrichtung im Abstand voneinander angeordneten getrennten Oberflächenabschnitten besteht, während die andere als durchgehende konische Oberfläche ausgebildet ist. Vorzugsweise ist der Klemmring mit der durchgehenden konischen Oberfläche versehen, die um den gesamten Umfang des Klemmrings umläuft, während das Andruckelement oder das Widerlager zweckmäßig mit mehr als zwei getrennten, in gleichen Winkelabständen angeordneten konischen Oberflächenabschnitten versehen ist. Grundsätzlich ist jedoch auch eine umgekehrte Anordnung denkbar.

Vorzugsweise beträgt die Summe der Flächeninhalte sämtlicher konischer Oberflächenabschnitte weniger als 80 % und mehr als 30 % des Flächeninhalts der gegenüberliegenden durchgehenden konischen Oberfläche. Die konischen Oberflächenabschnitte sind vorzugsweise an den Innen- oder Außenseiten von Vorsprüngen angeordnet, die in Richtung des Klemmrings axial über das Andruckelement oder das Widerlager überstehen.

Um zu vermeiden, dass eines der Enden des Klemmrings, die sich beiderseits von dessen Unterbrechung gegenüberliegen, an den Vorsprüngen hängen bleibt, wenn der Klemmring geweitet oder zusammengedrückt wird, sind die Vorsprünge angrenzend an die konischen Oberflächenabschnitte zweckmäßig mit Schrägen versehen, die allgemein in Umfangsrichtung ausgerichtet sind und in der Vorschubrichtung der Betätigungsmittel konvergieren.

Die Dichtmittel zum Abdichten des Befüllkanals umfassen bevorzugt eine Flachdichtung, die beim Vorschub der Betätigungsmittel gegen eine Mündung des Befüllkanals angepresst wird, um den Befüllkanal und ein in den Befüllkanal ragendes Füllrohr gegenüber der Umgebung abzudichten. Die Flachdichtung weist zwischen ihrem inneren und äußeren Umfang zweckmäßig eine Breite auf, die mindestens doppelt so breit wie die Breite einer ebenen Stirnfläche an der Mündung des Befüllkanals ist, so bei einer Verwendung der Befülleinrichtung auf Füllstutzen oder Füllnippeln mit verschieden großen Durchmessern auch ohne Austausch der Dichtung eine gute Abdichtung möglich ist. An Stelle einer Flachdichtung kann jedoch auch eine Ringdichtung vorgesehen werden, die in radialer Richtung gegen den inneren Umfang der Begrenzungswand des Befüllkanals angepresst wird.

Die Linearbewegung der Betätigungsmittel wird bevorzugt durch eine Beaufschlagung mit Druckluft ausgelöst. Dazu sieht eine weitere bevorzugte Ausgestaltung der Erfindung vor, dass die Betätigungsmittel einen mit Druckluft beaufschlagbaren Kolben umfassen, bei dessen Vorschub sowohl der Klemmring elastisch verformt als auch die Dichtung gegen die Mündung des Befüllkanals angepresst wird. Vorteilhaft wird zuerst der Klemmring verformt, um die Befülleinrichtung in Bezug zum Fluidspeicher zu fixieren, bevor die Abdichtung vorgenommen wird.

Um dies mit einem einzigen Kolben zu erreichen, umfassen die Betätigungsmittel bevorzugt ein Kraftübertragungselement in Form einer Druckfeder, deren Nachgiebigkeit geringer als die Nachgiebigkeit des elastisch verformbaren Klemmrings ist. Mit anderen Worten ist die Druckfeder steifer als der Klemmring, so dass sich dieser beim Vorschub der Betätigungsmittel vor der Druckfeder verformt, bis er gegen die Wand anliegt und nicht mehr weiter verformbar ist. Erst dann wird beim weiteren Vorschub der Betätigungsmittel die Druckfeder so weit zusammengedrückt, bis die Dichtung gegen die Mündung des Befüllkanals angepresst wird.

Um die Federkraft der Druckfeder gleichmäßig um den gesamten Umfang des Klemmrings bzw. der Dichtung zu verteilen und den von der Druckfeder benötigten Bauraum zu minimieren, umfasst die Druckfeder vorteilhaft einen Stapel von starr miteinander verbundenen Wellenfedern oder eine schraubenförmige Wellenfeder, wie sie z.B. von der Fa. Smalley angeboten wird. Jedoch kann alternativ auch eine Schraubendruckfeder verwendet werden. Die Rückstellfeder ist zweckmäßig ebenfalls als Wellenfederstapel oder als schraubenförmige Wellenfeder ausgebildet.

Statt eines einzigen Kolbens kann die Fixiervorrichtung jedoch auch zwei Kolben umfassen, von denen einer zur Verformung des Klemmrings und der andere zur Abdichtung des Befüllkanals dient. Die beiden Kolben besitzen dann unterschiedlich lange Vorschubwege, werden jedoch zweckmäßig über eine einzige Steuerleitung mit Druckluft beaufschlagt, die in einen gemeinsamen Druckluftraum mündet.

Die erfindungsgemäße Befülleinrichtung ist durch eine solche Fixiervorrichtung gekennzeichnet und weist vorteilhaft mindestens einen Druckluftanschluss auf, durch den die Betätigungsmittel mit Druckluft beaufschlagt werden können.

Im Folgenden wird die Erfindung anhand einiger in der Zeichnung dargestellter Ausführungsbeispiele näher erläutert.

Die Figuren 1a bis 1c zeigen einen Teil einer Befülleinrichtung zum Befüllen eines Behälters durch einen Füllstutzen mit Außengewinde in verschiedenen Betriebszuständen einer Fixiervorrichtung der Befülleinrichtung, wobei Fig. 1a einen Zustand vor der Fixierung und Abdichtung, Fig. 1b einen Zustand nach der Fixierung und vor der Abdichtung und Fig. 1c einen Zustand nach der Fixierung und Abdichtung zeigt;
die Figuren 2a bis 2c zeigen verschiedene Ansichten eines Klemmrings der Fixiervorrichtung aus den Figuren 1a bis 1c;
die Figuren 3a bis 3c zeigen verschiedene Ansichten eines Kraftübertragungselements der Fixiervorrichtung;
die Figuren 4a bis 4c zeigen einen Teil einer Befülleinrichtung zum Befüllen eines Behälters durch einen Füllstutzen mit Innengewinde in verschiedenen Betriebszuständen einer modifizierten Fixiervorrichtung;
die Figuren 5a bis 5c zeigen verschiedene Ansichten eines Klemmrings der Fixiervorrichtung aus den Figuren 4a bis 4c;
die Figuren 6a bis 6c zeigen verschiedene Ansichten eines Kraftübertragungselements der Fixiervorrichtung aus den Figuren 4a bis 4c;
Fig. 7 zeigt eine perspektivische Ansicht eines Wellenfederpakets der Fixiervorrichtungen aus den Figuren 1a bis 1c und 4a bis 4c.
Fig. 8 zeigt eine Befülleinrichtung mit einer weiteren modifizierten Fixiervorrichtung im unverformten Zustand des Klemmrings entsprechend Fig. 1a und Fig. 4a.

Die in der Zeichnung nur teilweise dargestellte, auf dem Fachgebiet auch als Befülladapter bezeichnete Befülleinrichtung 10 dient zur Erstbefüllung von Betriebsmittelbehältern von Kraftfahrzeugen mit einem flüssigen Betriebsmittel.

Bei dem in der Zeichnung nur teilweise dargestellten Behälter 12 handelt es sich zum Beispiel um einen durch Blasformen aus Kunststoff hergestellten Behälter, der an der Oberseite mit einem nach oben überstehenden Füllstutzen 14 versehen ist. Der Füllstutzen 14 begrenzt einen Befüllkanal 16, durch den das flüssige Betriebsmittel in den Behälter 12 gefüllt wird. Das Betriebsmittel kann zum Beispiel ein Kühlmittel sein, wie Kühlerflüssigkeit. Der Füllstutzen 14 umfasst eine allgemein zylindrische, zu seiner Längsmittelachse 18 koaxiale Wand 20, die den Befüllkanal 16 umgibt und zur Fixierung der Befülleinrichtung 10 dient.

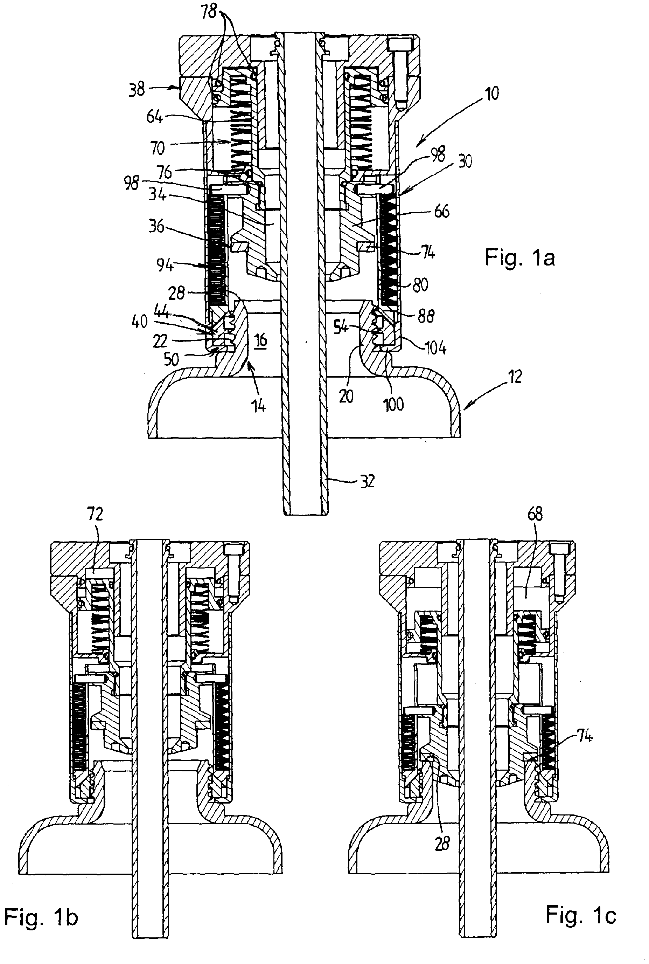

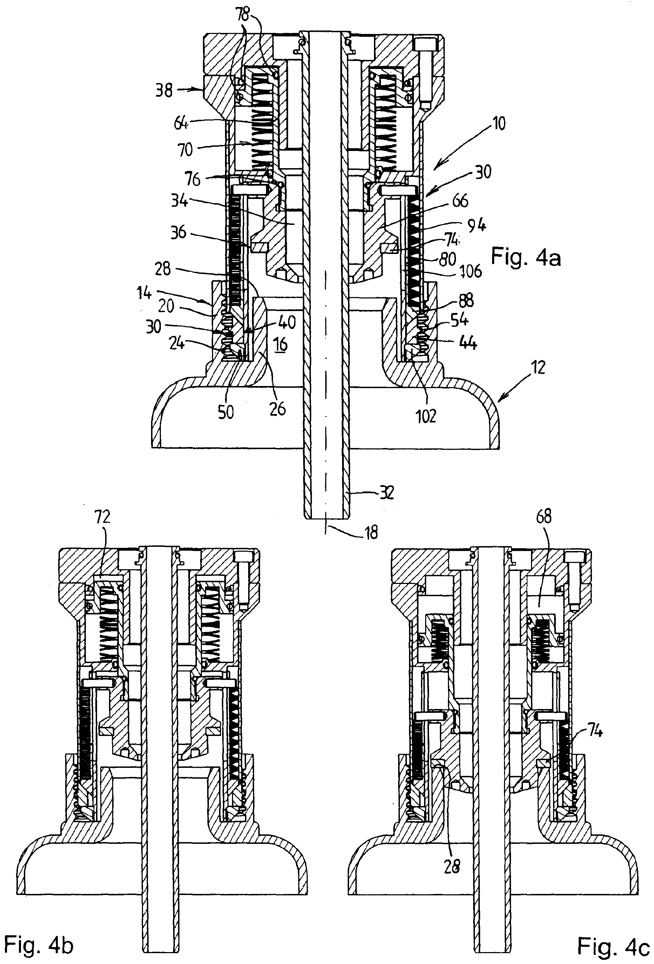

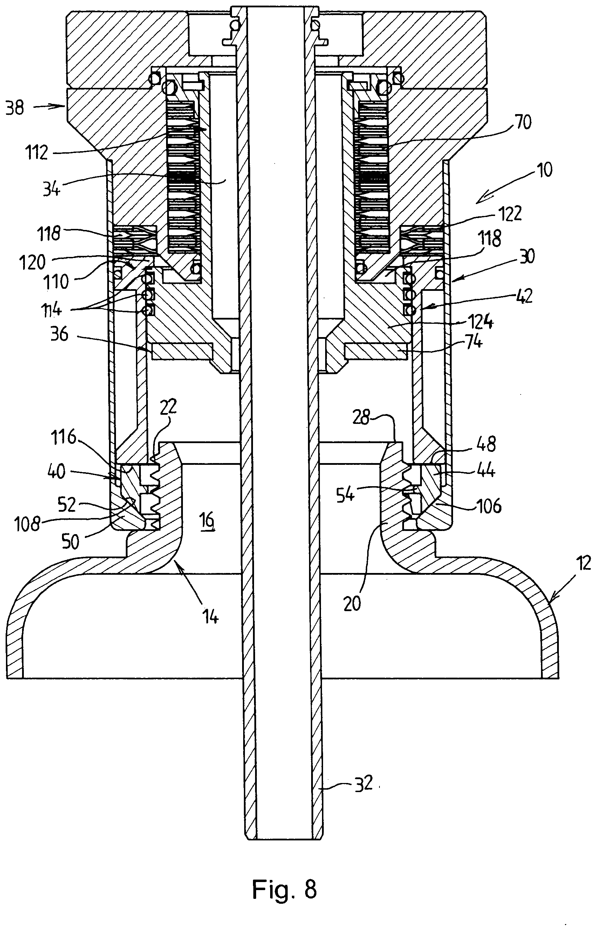

Bei dem Behälter 12 in den Figuren 1a bis 1c und in Fig. 8 ist die Wand 20 die Begrenzungswand des Befüllkanals 16 und weist an ihrem äußeren Umfang ein Außengewinde 22 für einen Verschlussdeckel mit Innengewinde auf. Bei dem Behälter 12 in den Figuren 4a bis 4c ist die Wand 20 in einem radialen Abstand vom Füllstutzen 14 und vom Befüllkanal 16 angeordnet und weist an ihrem inneren Umfang ein Innengewinde 24 für einen Verschlussdeckel mit Außengewinde auf. Der Befüllkanal 16 wird dort von einer zusätzlichen, zur Wand 20 koaxialen Begrenzungswand 26 begrenzt. Bei beiden Behältern 12 ist der Befüllkanal 16 am oberen Ende mit einer ebenen Mündung 28 versehen.

Wie am besten in den Figuren 1a bis 1c und 4a bis 4c dargestellt, umfassen sämtliche Befülleinrichtungen 10 eine Fixiervorrichtung 30, die dazu dient, die Befülleinrichtungen 10 zum Befüllen des Behälters 12 lösbar aber axial unbeweglich mit diesem zu kuppeln. Weiter umfassen alle Befülleinrichtungen 10 ein zylindrisches Füllrohr 32, das sich von oben her durch den Befüllkanal 16 in den Behälter 12 einführen lässt, sowie eine Absaugeinrichtung (nicht dargestellt), mit der nach der Fixierung der Befülleinrichtung 10 und der Abdichtung des Befüllkanals 16 gegenüber der Umgebung durch einen das Füllrohr 32 umgebenden Ringspalt 34 Luft aus dem Behälter 12 abgesaugt werden kann, um den Behälter 12 vor der Befüllung zu evakuieren und dadurch eine Blasenbildung im Betriebsmittel zu verhindern. Der Unterdruck im Behälter 12 kann zudem genutzt werden, um die Zufuhr des Betriebsmittels aus einem mit dem oberen Ende des Füllrohrs 32 kommunizierenden externen Betriebsmittelspeicher (nicht dargestellt) durch das Füllrohr 32 zu erleichtern. Weiter umfassen die Befülleinrichtungen 10 ein nach unten offenes Gehäuse 38, das die Fixiervorrichtung 30 und einen oberen Teil des Füllrohrs 32 umgibt.

Bei allen Befülleinrichtungen 10 umfasst die Fixiervorrichtung 30 Dichtmittel 36 zur Abdichtung des Befüllkanals 16 und des Füllrohrs 32 gegenüber der Umgebung, Fixiermittel 40 zum form- und reibschlüssigen Eingriff mit der Wand 20, sowie Betätigungsmittel 42, mit denen sich die Fixiermittel 40 bei Bedarf mit der Wand 20 in Eingriff bringen lassen.

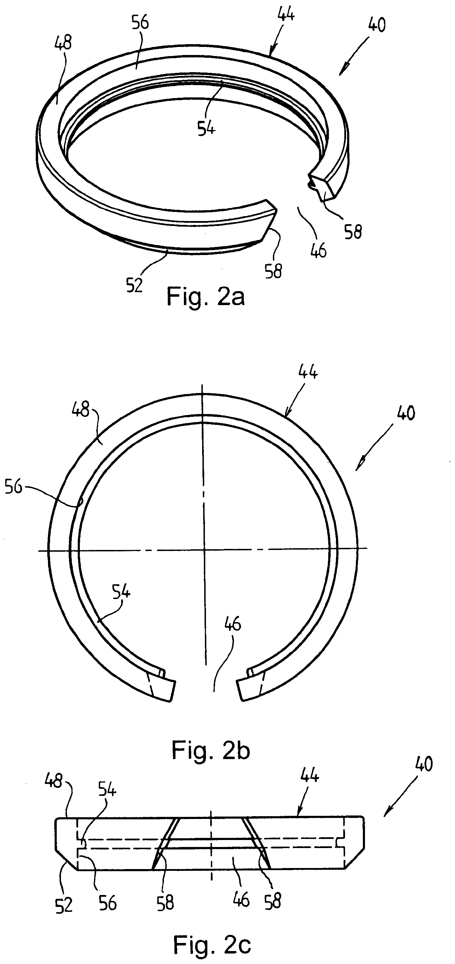

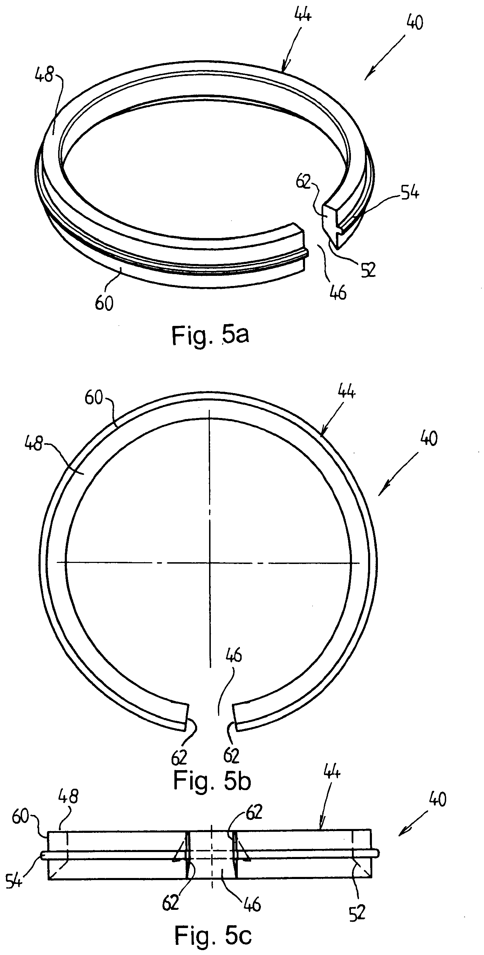

Wie am besten in den Figuren 2a bis 2c und 5a bis 5c dargestellt, umfassen die Fixiermittel 40 einen einteiligen Klemmring 44 aus einem elastisch verformbaren Kunststoff, wie z.B. POM, PVC oder PP, der sich nahezu um den gesamten Umfang der Wand 20 herum erstreckt und in seiner Umfangsrichtung mit einer einzigen Unterbrechung 46 versehen ist. Der Klemmring 44 weist an einer Seite eine ebene Stirnfläche 48 auf, die nach der Montage im Gehäuse 38 nach unten weist und auf einer gegenüberliegenden ebenen Oberseite eines Widerlagers 50 am unteren Ende des Gehäuses 38 aufliegt. An der anderen Seite ist der Klemmring 44 mit einer konischen Oberfläche 52 versehen, die unter einem Winkel von 45 Grad in Bezug zur Ebene der Stirnfläche 48 geneigt ist. Weiter weist der Klemmring 44 eine radial überstehende schmale Rippe 54 auf, die sich im Wesentlichen über die gesamte Umfangslänge des Klemmrings 44 erstreckt.

Bei dem Klemmring 44 in den Figuren 2a bis 2c und in Fig. 8 ist die konische Oberfläche 52 ein Außenkonus, während die Rippe 54 nach innen über eine zylindrische innere Umfangsfläche 56 übersteht. Die Breite und die Höhe der Rippe 54 sind so bemessen, dass sie zwischen zwei benachbarte Gewindeflanken des in die Wand 20 eingeformten Außengewindes 22 eingreifen kann. Die Unterbrechung 46 erstreckt sich dort in unverformtem Zustand über einen Umfangswinkel von etwa 20 bis 30 Grad. Die beiden zur Unterbrechung 46 benachbarten Enden des Klemmrings 44 sind mit Abschrägungen 58 versehen, die in Richtung der Stirnfläche 48 konvergieren.

Bei dem Klemmring 44 in den Figuren 5a bis 5c ist die konische Oberfläche 52 ein Innenkonus, während die Rippe 54 nach außen über eine zylindrische äußere Umfangsfläche 60 übersteht. Die Unterbrechung 46 erstreckt sich dort in unverformtem Zustand nur über einen Umfangswinkel von etwa 15 Grad. Die beiden an die Unterbrechung 46 angrenzenden Enden des Klemmrings 44 weisen ebene, zur Stirnfläche 48 senkrechte Begrenzungen 62 auf.

Bei den Fixiervorrichtungen in den Figuren 1 bis 7 umfassen die Betätigungsmittel 42 einen einzigen Kolben 64, der in einem vom Gehäuse 38 umgebenen Zylinderraum 68 (Fig. 1c und 4c) angeordnet und mit Druckluft beaufschlagbar ist, sowie einen unterhalb vom Kolben 64 angeordneten, mit dem Kolben 64 verschraubten Dichtungsträger 66, der zusammen mit dem Kolben 64 innerhalb des Gehäuses 38 entgegen der Kraft einer Rückstellfeder 70 aus einer oberen Endstellung (Fig. 1a und 4a) in eine untere Endstellung (Fig. 1c und 4c) verschiebbar ist.

Der Kolben 64 und der Dichtungsträger 66 sind hülsenartig ausgebildet und umgeben den Ringspalt 34. Die Rückstellfeder 70 ist eine Wellenfeder aus einem schraubenförmig gewundenen gewellten Federdraht, die unter der Bezeichnung Wave Spring von der Fa. Smalley vertrieben wird. Die Feder 70 umgibt den Kolben 64, wobei sie sich mit ihrem oberen Ende gegen eine obere Stirnwand des Kolbens 64 und mit ihrem unteren Ende gegen eine Ringschulter des Gehäuses 38 abstützt. Die Druckluft wird in einen Druckraum 72 (Fig. 1b und 4b) zwischen der Oberseite des Kolbens 64 und einer gegenüberliegenden oberen Stirnwand des Gehäuses 38 zugeführt. Bei der Zufuhr der Druckluft drückt der Kolben 64 entgegen der Kraft der Rückstellfeder 70 von oben her auf den Dichtungsträger 66, so dass sich dieser zusammen mit dem Kolben 64 nach unten bewegt, wie in den Figuren 1a bis 1c und 4a bis 4c dargestellt.

Die Dichtmittel 36 umfassen eine am Dichtungsträger 66 montierte ebene Flachdichtung 74, die sich nach oben gegen eine Ringschulter des Dichtungsträgers 66 abstützt und bei der Abwärtsbewegung des Kolbens 64 und des Dichtungsträgers 66 von oben her gegen die ebene Stirnfläche 28 an der Mündung des Befüllkanals 16 angepresst wird, wie in Fig. 1c und 4c dargestellt. Die Dichtung 74 verhindert, dass beim Ansaugen von Luft aus dem Behälter 12 an dieser Stelle Umgebungsluft von außen her in den Ringspalt 34 oder den Behälter 12 eindringen kann.

Die Dichtmittel 36 umfassen weiter zwei O-Ring-Dichtungen 76, die an zwei Stellen zwischen dem Kolben 64 und dem Gehäuse 38 bzw. dem Dichtungsträger 66 und dem Kolben 64 angeordnet sind. Die Dichtungen 76 verhindern, dass an diesen zwei Stellen Umgebungsluft aus dem Gehäuse in den Ringspalt 34 eintreten kann, nachdem die Dichtung 74 gegen die Mündung des Befüllkanals 16 angepresst wird. Drei weitere, zwischen dem Gehäuse 38 und dem Kolben 64 angeordnete O-Ring-Dichtungen 78 dienen zur Abdichtung des Druckraums 72 und verhindern ein Entweichen von Druckluft aus dem Druckraum 72.

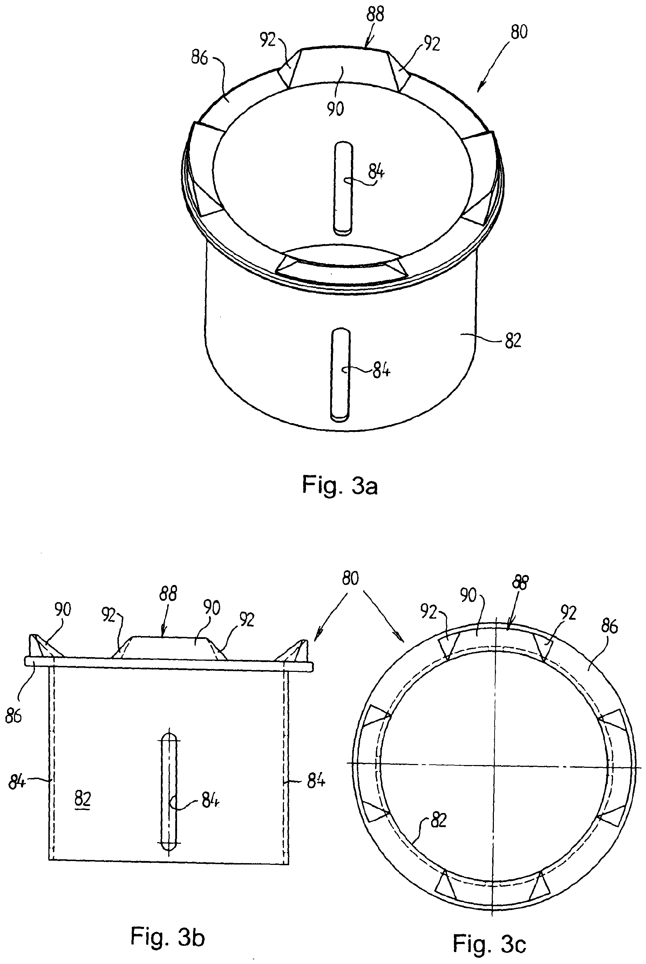

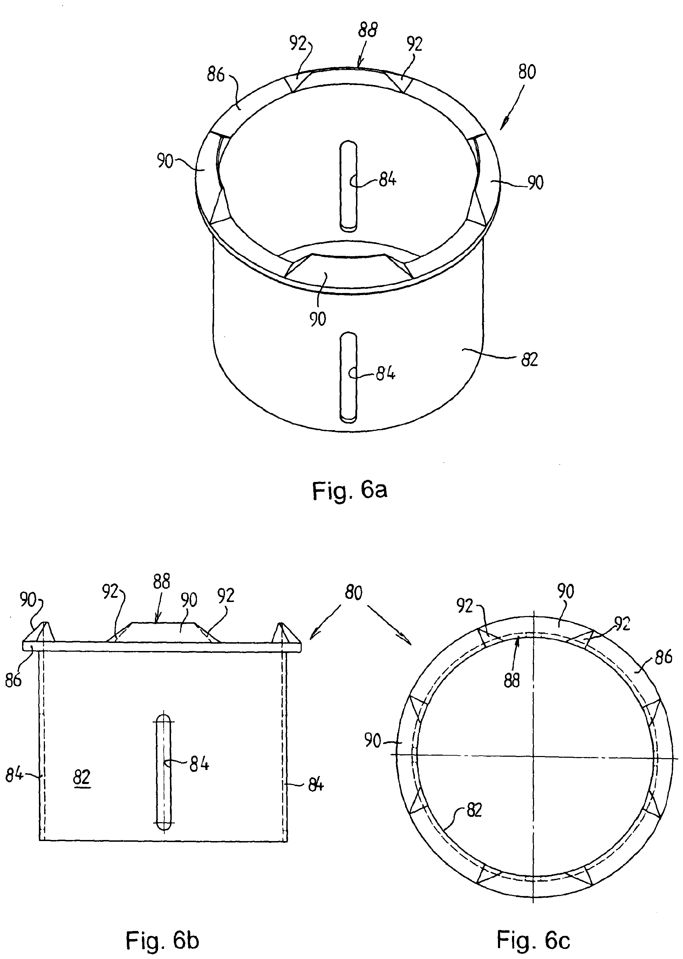

Die Betätigungsmittel 42 umfassen weiter ein lose in das untere Ende des Gehäuses eingesetztes einteiliges Andruckelement 80, das am besten in den Figuren 3a bis 3c sowie 6a bis 6c dargestellt ist. Das Andruckelement 80 weist einen hülsenartigen zylindrischen Abschnitt 82 auf, der mit zwei Paaren von diametral gegenüberliegenden Langlöchern 84 versehen ist und an einem seiner Stirnenden einen radial nach außen überstehenden Bund 86 sowie vier gleiche, in axialer Richtung über den Bund 86 überstehende, im Querschnitt keilförmige Vorsprünge 88 aufweist. Die Vorsprünge 88 sind in gleichen Winkelabständen voneinander angeordnet und werden jeweils in radialer Richtung von Abschnitten einer konischen Oberfläche 90 begrenzt, die unter einem Winkel von 45 zur ebenen Oberseite des Bundes 86 geneigt und zur konischen Oberfläche 52 des Klemmrings 44 komplementär sind. Mit anderen Worten sind die konischen Oberflächenabschnitte 90 bei dem Andruckelement 80 in den Figuren 3a bis 3c nach innen geneigt, während sie bei dem Andruckelement 80 in den Figuren 6a bis 6c nach außen geneigt sind.

Nach der Montage des Andruckelements 80 im Gehäuse 38 sind die Vorsprünge 88 nach unten gerichtet, wobei die konischen Oberflächenabschnitte 90 der nach oben weisenden konischen Oberfläche 52 des Klemmrings 44 gegenüberliegen und mit dieser zusammenwirken, um den Durchmesser des Klemmrings 44 durch eine axiale Vorschubbewegung des Andruckelements 80 nach unten zu verändern. Um die zur Verformung des Klemmrings 44 notwendige Kraft zu verringern, beträgt die Summe der Flächeninhalte von allen vier konischen Oberflächenabschnitten 90 nur etwa 40 bis 50 % des Flächeninhalts der konischen Oberfläche 52 des Klemmrings 44. Bei der Verformung des Klemmrings 44 gleiten die konischen Oberflächenabschnitte 90 auf der konischen Oberfläche 52 des Klemmrings 44. Um ein Verhaken der zur Unterbrechung 46 benachbarten Enden des Klemmrings 44 an einem der Vorsprünge 88 zu verhindern, sind die Vorsprünge 88 an ihren entgegengesetzten Stirnenden mit Schrägen 92 versehen.

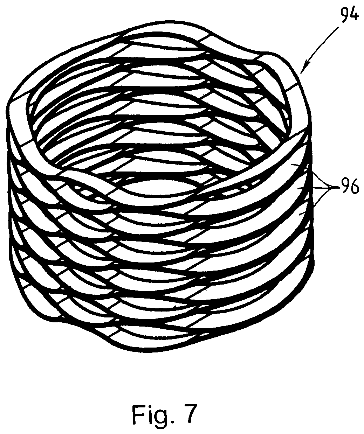

Der hülsenartige Abschnitt 82 des Andruckelements 80 ist von einer Druckfeder 94 umgeben. Die Druckfeder 94 hat die Aufgabe, das Andruckelement 80 bzw. dessen Bund 86 beim Vorschub des Kolbens 64 um seinen gesamten Umfang herum gleichmäßig von oben gegen den Klemmring 44 zu drücken. Wie am besten in Fig. 7 dargestellt, ist die Druckfeder 94 wie die Rückstellfeder 70 eine Wellenfeder aus einem schraubenförmig gewundenen gewellten Federdraht 96, dessen Erhebungen und Vertiefungen 96 Scheitel- an-Scheitel angeordnet sind.

Das untere Ende der Druckfeder 94 stützt sich gegen den Bund 86 des Andruckelements 80 ab, während sich das obere Ende der Druckfeder 94 gegen zwei Paare von diametral ausgerichteten radialen Gewindestiften 98 abstützt, die in entsprechende radiale Gewindebohrungen des Dichtungsträgers 66 eingeschraubt sind und sich nach außen durch die Langlöcher 84 des Andruckelements 80 hindurch erstrecken. Die Nachgiebigkeit der Druckfeder 94 ist geringer als die Nachgiebigkeit des elastisch verformbaren Klemmrings 44.

Wenn ausgehend von dem in Fig. 1a und 4a dargestellten Ruhe- oder Ausgangszustand der Befülleinrichtung 10 der Druckraum 72 mit Druckluft beaufschlagt und der Kolben 64 nach unten bewegt wird, drückt der Kolben 64 den Dichtungsträger 66 und die vier Gewindestifte 98 nach unten, wodurch die letzteren von oben auf die Druckfeder 94 einwirken und diese nach unten gegen den Bund 86 des Andruckelements 40 drücken. Dadurch wird das Andruckelement 40 bzw. dessen Vorsprünge 88 von oben her gegen den Klemmring 44 gedrückt. Da sich der Klemmring 44 nach unten gegen das Widerlager 50 abstützt, verschieben sich die konischen Oberflächenabschnitte 90 der Vorsprünge 88 entlang der gegenüberliegenden konischen Oberfläche 52 des Klemmrings 44. Infolge der größeren Nachgiebigkeit des Klemmrings 44 im Vergleich zu derjenigen der Druckfeder 94 führt dies dazu, dass zuerst der Klemmring 44 unter Veränderung seines Durchmessers elastisch verformt wird, bis er mit der Wand 20 in Eingriff tritt und gegen diese angepresst wird, bevor die Druckfeder 94 wesentlich verformt wird.

Dabei wird der Klemmring 44 aus den Figuren 2a bis 2c unter Verringerung seines Durchmessers zusammengedrückt, bis die Rippe 54 von außen her zwischen die Gewindeflanken zweier benachbarter Gewindegänge des Außengewindes 22 ragt und gegen die Gewindeflanken angepresst wird, wie in Fig. 1b dargestellt. Demgegenüber wird der Klemmring aus den Figuren 5a bis 5c unter Vergrößerung seines Durchmessers geweitet, bis die Rippe 54 von innen her zwischen die Gewindeflanken zweier benachbarter Gewindegänge des Innengewindes 24 ragt und gegen diese angepresst wird, wie in Fig. 4b dargestellt. Da die Rippe 54 dabei form- und kraftschlüssig zwischen die Gewindeflanken eingreift, wird die Befülleinrichtung 10 in diesem Zustand in Bezug zum Behälter 12 translatorisch unbeweglich fixiert.

Da sich der Klemmring 44 in diesem Zustand nicht mehr weiter verformen kann, wird beim weiteren Vorschub des Kolbens 64 und des Dichtungsträgers 66 nach unten als nächstes die Druckfeder 94 so weit zusammengedrückt, bis die Dichtung 74 auf der Mündung des Befüllkanals 16 zu liegen kommt und dort von oben her gegen die Stirnfläche 28 angepresst wird, wie in den Figuren 1c und 4c dargestellt. Auf diese Weise kommt die Vorrichtung 30 mit einem einzigen Kolben 64 und ohne ein Ventil aus.

Wenn die Befülleinrichtung 10 nach der Befüllung des Behälters 12 mit dem Betriebsmittel vom Füllstutzen 14 abgenommen werden soll, wird die Beaufschlagung des Druckraums 72 mit Druckluft unterbrochen und der Druckraum 72 zur Umgebung hin entlüftet. Daraufhin bewegt die Rückstellfeder 70 den Kolben 64 und den Dichtungsträger 66 wieder nach oben in die in Fig. 1a und 4a dargestellte Ruhestellung zurück. Dabei wird zum einen die Dichtung 74 von der Mündung des Befüllkanals 16 abgehoben. Zum anderen bewegen sich die Gewindestifte 98 unter Entspannung der Druckfeder 94 mit dem Dichtungsträger 66 nach oben, wo sie vor Erreichen ihrer Ruhestellung in Fig. 1a und Fig. 4a gegen das obere Ende der Langlöcher 84 anschlagen und ein Abheben des Andruckelements 80 vom Klemmring 44 bewirken. Infolgedessen kehrt der Klemmring 44 durch elastische Rückverformung unter erneuter Veränderung seines Durchmessers selbsttätig in den in Fig. 2a bis 2c bzw. 5a bis 5c dargestellten unverformten Zustand zurück, wobei er wieder aus dem Eingriff mit der Wand 20 bzw. dem Gewinde 22, 24 ausgerückt wird. Um bei der Rückkehr des Klemmrings 44 in den unverformten Zustand dessen Reibung auf dem Widerlager 50 zu minimieren, kann entweder die Oberseite des Widerlagers 50 oder die gegenüberliegende Stirnfläche 48 des Klemmrings 44 leicht geneigt sein, um die gegenseitige Auflagefläche zu verkleinern.

In dem Fall, wo statt eines Außen- oder Innengewindes 22, 24 ein radial überstehender umlaufender Bund am äußeren bzw. inneren Umfang der Wand 20 vorgesehen ist, hintergreift die Rippe 54 diesen Bund und wird hinter dem Bund radial gegen die Wand 20 angepresst, wodurch ebenfalls ein form- und kraftschlüssiger Eingriff erzielt wird.

Bei der Fixiervorrichtung 30 aus den Figuren 1a bis 1c besteht das Widerlager 50 aus einem zur Stirnfläche 48 des Klemmrings 44 parallelen nach innen ragenden unteren Schenkel 100 eines im Querschnitt L-förmigen Metallrings 104, der am offenen unteren Ende des Gehäuses 38 fest angeschraubt ist. In diesem Fall ist der Durchmesser einer vom Schenkel begrenzten Eintrittsöffnung des Gehäuses 38 etwas größer als der Außendurchmesser des Außengewindes 22.

Bei der Fixiervorrichtung 30 aus den Figuren 4a bis 4c wird das Widerlager 50 von einem Ring 102 gebildet, der unterhalb der Vorsprünge 88 an einem über das untere Ende der Andruckelements 80 hinaus nach unten verlängerten hohlzylindrischen Teil 106 des Gehäuses 38 festgeschraubt ist. Der hohlzylindrische Teil 106 ist ebenfalls mit zwei Paaren von Langlöchern für die Gewindeschrauben 98 versehen.

Beim Kuppeln der Befülleinrichtung 10 mit dem Behälter 12 wird das Gehäuse 38 der Fixiervorrichtung 30 abgesenkt, bis das Widerlager 50 von oben gegen den Behälter 12 (Fig. 1a) bzw. gegen den Grund des Ringspalts zwischen den Wänden 20 und 26 anschlägt (Fig. 4a), so dass sich das Gehäuse 38 in axialer Richtung des Füllrohrs 32 gegen den Behälter 12 abstützt.

Im Unterschied zu der zuvor beschriebenen Befülleinrichtung 10 wird der Klemmring 44 bei der Befülleinrichtung 10 in Fig. 8 in umgedrehter Ausrichtung montiert, so dass er nicht an seiner Oberseite sondern an seiner Unterseite gegenüber dem Widerlager 50 mit der konischen Oberfläche 52 versehen ist. Das Widerlager 50 ist dort an seiner Oberseite mit vier im Winkelabstand voneinander angeordneten Erhebungen 106 versehen, die den Vorsprüngen 88 des Andruckelements 80 in den Figuren 3a bis 3c bzw. 6a bis 6c entsprechen und wie diese mit konischen Oberflächenabschnitten 108 versehen sind, die eine zur Oberfläche 52 komplementäre Neigung besitzen.

Weiter umfassen bei der Befülleinrichtung 10 in Fig. 8 die Betätigungsmittel 42 zwei im Querschnitt ringförmige Kolben 110 und 112, die in einem gemeinsamen Zylinderraum des Gehäuses 38 axial verschiebbar sind. Der Kolben 110 weist einen kürzeren Kolbenweg auf und dient dazu, bei seinem Vorschub den Klemmring 44 elastisch zu verformen, während der Kolben 112 mit dem längeren Kolbenweg zur Abdichtung des Befüllkanals 16 dient. Die beiden Kolben 110, 112 sind in Bezug zueinander axial verschiebbar, wobei sie jedoch durch drei O-Ringe 114 gegeneinander abgedichtet und zudem reibschlüssig miteinander verbunden sind.

Der Kolben 110 ist an seinem unteren Ende mit einer nach unten weisenden ebenen Stirnfläche 116 versehen, die in dem in Fig. 8 dargestellten Ruhe- oder Ausgangszustand gegen die ebene Stirnfläche 48 des Klemmrings 44 anliegt. Der Vorschub der beiden Kolben 110, 112 nach unten wird durch Zufuhr von Druckluft in einen Druckraum 118 bewirkt, der oberhalb vom Kolben 110 und von einer die Flachdichtung 74 tragenden Erweiterung 124 des Kolbens 112 im Gehäuse 38 angeordnet ist.

Wenn die Druckluft in den Druckraum 118 zugeführt wird, bewegen sich zuerst beide Kolben 110 und 112 gemeinsam nach unten, da der Kolben 110 am oberen Ende einen ringförmigen Mitnehmer 120 aufweist, der von oben her gegen die Oberseite des Kolbens 112 anliegt. Beim Vorschub der beiden Kolben 110, 112 drückt zuerst der Kolben 110 mit seinem unteren Ende auf den Klemmring 44, wodurch dieser von oben gegen das Widerlager 50 gedrückt und infolge des Zusammenwirkens der beiden konischen Oberflächen 52 und 108 unter Verkleinerung seines Durchmessers elastisch verformt wird. Dadurch wird die Rippe 54 zwischen den Gewindeflanken zweier benachbarter Gewindegänge des Gewindes 22 gegen die Wand 20 des Füllstutzens 14 angepresst und mit dem Gewinde 22 in formschlüssigen Eingriff gebracht.

Wenn sich der Klemmring 44 nicht mehr weiter verformen kann, stoppt die Bewegung des Kolbens 110, während der Kolben 112 infolge der Druckluftzufuhr in den Druckraum 118 weiter nach unten verschoben wird, wobei er sich am Kolben 110 entlang bewegt, bis die Dichtung 74 von oben her gegen die Mündung 28 des Befüllkanals 16 angepresst wird.

Beim Anpressen der Dichtung 74 wird eine nach oben gerichtete Reaktionskraft auf das Gehäuse 38 ausgeübt, wodurch wiederum das Widerlager 50 mit einer zusätzlichen Kraft von unten her gegen den Klemmring 44 gedrückt wird. Durch das Zusammenwirken der konischen Oberflächen 108 und 52 des Widerlagers 50 und des Klemmrings 44 kann diese Kraft genutzt werden, um die Rippe 54 des Klemmrings 44 mit einer noch größeren Kraft zwischen die Gewindeflanken der benachbarten Gewindegänge zu pressen. Dadurch kann noch besser als bei den zuvor beschriebenen Befülleinrichtungen 10 verhindert werden, dass sich die Rippe 54 infolge der Reaktionskraft an der oberen Gewindeflanke entlang nach oben und außen verschiebt und aus dem Eingriff mit dem Gewinde 22 ausgerückt wird.

Wenn die Befüllung des Behälters 12 abgeschlossen ist, wird die Zufuhr von Druckluft in den Druckraum 118 unterbrochen und der oberhalb der beiden Kolben 110, 112 angeordnete Druckraum 118 zur Umgebung hin entlüftet. Die Entlüftung bewirkt, dass die beim Vorschub der Kolben 110, 112 bzw. des Kolbens 112 gespannte Rückstellfeder 70 zuerst den Kolben 112 nach oben verschiebt, bis dieser gegen den Mitnehmer 120 anschlägt und dadurch beide Kolben 110, 112 nach oben in die Ruhe- oder Ausgangsstellung zurück bewegt werden.

Der Druckraum 118 kann optional eine oberhalb vom Kolben 110 angeordnete und nur auf den Kolben 110 einwirkende vorgespannte Druckfeder 122 enthalten, die wie die Rückstellfeder 70 als Wellenfeder ausgebildet sein kann. Bei der Zufuhr von Druckluft in den Druckraum 118 stellt die Druckfeder 122 durch die zusätzlich auf den Kolben 110 ausgeübte Federkraft sicher, dass sich im Falle eines reibungsbedingten Festsitzens des Kolbens 110 nicht nur der Kolben 112 nach unten bewegt. Die Druckfeder 122 ist schwächer als die Rückstellfeder 70, so dass sie bei der Entlüftung des Druckraums 118 von der Rückstellfeder 70 wieder vorgespannt wird.

Die Befülleinrichtung 10 in Fig. 8 eignet sich auch zur Befüllung von Behältern 12, deren Füllstutzen 14 kleinere Querschnittsabmessungen als der in Fig. 8 dargestellte Füllstutzen 14 haben. Zu diesem Zweck weist zum einen die vom Kolben 112 bzw. dessen Erweiterung 124 getragene Flachdichtung 74 eine relativ große radiale Breite zwischen ihrem Innen- und Außendurchmesser auf, so dass sie auch gegen die Mündung 28 von Füllstutzen 14 mit kleineren Querschnittsabmessungen angepresst wird. Zum anderen besitzen auch das Widerlager 50 und der Klemmring 44 zwischen ihrem Innen- und Außendurchmesser eine relativ große Breite, so dass der Klemmring 44 ausreichend stark verformt werden kann, um ihn auch mit der Wand 20 eines Füllstutzens 14 mit kleineren Querschnittsabmessungen in Eingriff zu bringen, ohne dass er nach unten aus dem unteren Ende des Gehäuse 38 heraus gedrückt wird. Wenn der Klemmring 44 noch breiter gemacht werden soll, kann er mit Einkerbungen oder Schlitzen (nicht dargestellt) versehen werden, um seine elastische Verformbarkeit zu verbessern.

## Patentansprüche

1. Vorrichtung (30) zum Kuppeln einer Befülleinrichtung (10) mit einem Befüllkanal (16) eines Fluidspeichers (12), umfassend Fixiermittel (40) zur lösbaren Fixierung der Befülleinrichtung (10) in Bezug zum Fluidspeicher (12), Dichtmittel (36) zum Abdichten des Befüllkanals (16) gegenüber der Umgebung, sowie linear bewegliche Betätigungsmittel (42), durch deren Vorschub sich die Fixiermittel (40) mit einer den Befüllkanal (16) umgebenden allgemein zylindrischen Wand (20) in Eingriff bringen lassen, wobei die Fixiermittel (40) einen Klemmring (44) umfassen, und wobei die Betätigungsmittel (42) den Klemmring (44) beim Vorschub gegen ein Widerlager (50) der Vorrichtung drücken, wodurch der Klemmring (44) unter Veränderung seines Durchmessers mit der Wand (20) in Eingriff tritt, **dadurch gekennzeichnet, dass** der Klemmring (44) einteilig ausgebildet ist, aus einem elastisch verformbaren Kunststoff besteht und in Umfangsrichtung mit einer einzigen Unterbrechung (46) versehen ist, und dass der Klemmring (44) beim Zurückziehen der Betätigungsmittel (42) durch elastische Rückverformung selbsttätig aus dem Eingriff mit der Wand (20) ausrückt.

2. Vorrichtung (30) nach Anspruch 1, **dadurch gekennzeichnet, dass** der Klemmring (44) mindestens eine zur Wand (20) hin überstehende Rippe (54) zum Eingriff in ein in die Wand (20) eingeformtes Gewinde (22, 24) oder zum Hintergreifen eines über die Wand (20) überstehenden Bundes aufweist.

3. Vorrichtung (30) nach einem der vorangehenden Ansprüche, **dadurch gekennzeichnet, dass** der Klemmring (44) einerseits und die Betätigungsmittel (42) und/oder das Widerlager (50) andererseits zusammenwirkende konische Oberflächen (52, 90; 52, 108) aufweisen.

4. Vorrichtung (30) nach Anspruch 3, **dadurch gekennzeichnet, dass** die zusammenwirkenden konischen Oberflächen (52, 90; 52, 108) des Klemmrings (44) und der Betätigungsmittel (42) und/oder des Widerlagers (50) als komplementärer Innen- bzw. Außenkonus ausgebildet sind.

5. Vorrichtung (30) nach Anspruch 3 oder 4, **dadurch gekennzeichnet, dass** eine von den zusammenwirkenden konischen Oberflächen (52, 90; 52, 108) aus mehreren in Umfangsrichtung im Abstand voneinander angeordneten getrennten Oberflächenabschnitten (90; 108) besteht.

6. Vorrichtung (30) nach Anspruch 5, **dadurch gekennzeichnet, dass** der Flächeninhalt der getrennten Oberflächenabschnitte (90; 108) zusammen weniger als 80 % des Flächeninhalts der anderen (52) von den zusammenwirkenden konischen Oberflächen (52, 90; 52, 108) beträgt.

7. Vorrichtung (30) nach Anspruch 5 oder 6, **dadurch gekennzeichnet, dass** an die entgegengesetzten Enden der getrennten Oberflächenabschnitte (90; 108) Schrägen (92) angrenzen.

8. Vorrichtung (30) nach einem der vorangehenden Ansprüche, **dadurch gekennzeichnet, dass** das Widerlager (50) in Bezug zu einem Gehäuse (38) der Vorrichtung (30) ortsfest ist.

9. Vorrichtung (30) nach einem der Ansprüche 1 bis 8, **dadurch gekennzeichnet, dass** sich der Klemmring (44) unter Verkleinerung seines Durchmessers von außen her mit der Wand (20) in Eingriff bringen lässt und dass sich im unverformten Zustand des Klemmrings (44) die Unterbrechung (46) über einen Umfangswinkel von mehr als 20 Grad erstreckt.

10. Vorrichtung (30) nach Anspruch 9, **dadurch gekennzeichnet, dass** die zur Unterbrechung (46) benachbarten Enden des Klemmrings (44) mit Abschrägungen (58) versehen sind, die in Richtung des Vorschubs der Betätigungsmittel (42) konvergieren.

11. Vorrichtung (30) nach einem der Ansprüche 1 bis 8, **dadurch gekennzeichnet, dass** sich der Klemmring (44) unter Vergrößerung seines Durchmessers von innen her mit der Wand (20) in Eingriff bringen lässt und dass sich im verformten Zustand des Klemmrings (44) die Unterbrechung (46) über einen Umfangswinkel von mehr als 30 Grad erstreckt.

12. Vorrichtung (30) nach einem der vorangehenden Ansprüche,
**dadurch gekennzeichnet, dass** die Dichtmittel (36) eine Dichtung (74) umfassen, die durch den Vorschub der Betätigungsmittel (42) gegen eine Mündung (28) des Befüllkanals (16) angepresst wird.

13. Befülleinrichtung (10) zum Befüllen eines Fluidspeichers (12) mit einem Fluid, **dadurch gekennzeichnet, dass** die Befülleinrichtung eine Vorrichtung (30) nach einem der vorangehenden Ansprüche umfasst.

## Claims

1. Device (30) for coupling a filling device (10) to a filling duct (16) of a fluid reservoir (12), comprising fixing means (40) for releasable fixing of the filling device (10) in relation to the fluid reservoir (12), sealing means (36) for sealing the filling duct (16) with respect to the environment, and linearly movable actuating means (42), due to the advance of which the fixing means (40) can be brought into engagement with a generally cylindrical wall (20) surrounding the filling duct (16), wherein the fixing means (40) comprise a clamping ring (44), and wherein the actuating means (42) press the clamping ring (44) during the advance against an abutment (50) of the device, whereby the clamping ring (44) engages, with a change in its diameter, with the wall (20), **characterised in that** the clamping ring (44) is formed integrally, consists of an elastically deformable plastic and is provided in a circumferential direction with a single interruption (46), and that the clamping ring (44), on withdrawal of the actuating means (42), moves automatically out of engagement with the wall (20) by elastic reverse deformation.

2. Device (30) according to claim 1, **characterised in that** the clamping ring (44) comprises at least one rib (54) protruding towards the wall (20) for engaging in a thread (22, 24) moulded into the wall (20) or for engaging behind a collar protruding above the wall (20).

3. Device (30) according to one of the preceding claims, **characterised in that** the clamping ring (44) on the one hand and the actuating means (42) and/or the abutment (50) on the other hand comprise interacting conical surfaces (52, 90; 52, 108).

4. Device (30) according to claim 3, **characterised in that** the interacting conical surfaces (52, 90; 52, 108) of the clamping ring (44) and the actuating means (42) and/or the abutment (50) are formed as complementary inner and outer cone.

5. Device (30) according to claim 3 or 4, **characterised in that** one of the interacting conical surfaces (52, 90; 52, 108) consists of several separate surface sections (90; 108) arranged spaced at a distance from one another in a circumferential direction.

6. Device (30) according to claim 5, **characterised in that** the surface area of the separate surface sections (90; 108) together amount to less than 80% of the surface area of the other (52) of the interacting conical surfaces (52, 90; 52, 108).

7. Device (30) according to claim 5 or 6, **characterised in that** bevels (92) adjoin the opposite ends of the separate surface sections (90; 108).

8. Device (30) according to any one of the preceding claims, **characterised in that** the abutment (50) is stationary in relation to a housing (38) of the device (30).

9. Device (30) according to any one of claims 1 to 8, **characterised in that** the clamping ring (44) can be brought into engagement, with a reduction in its diameter, with the wall (20) from outside and that in the undeformed state of the clamping ring (44), the interruption (46) extends over a circumferential angle of more than 20 degrees.

10. Device (30) according to claim 9, **characterised in that** the ends of the clamping ring (44) adjacent to the interruption (46) are provided with chamfers (58), which converge in the direction of the advance of the actuating means (42).

11. Device (30) according to any one of claims 1 to 8, **characterised in that** the clamping ring (44) can be brought into engagement, with an enlargement of its diameter, with the wall (20) from inside and that in the deformed state of the clamping ring (44), the interruption (46) extends over a circumferential angle of more than 30 degrees.

12. Device (30) according to any one of the preceding claims, **characterised in that** the sealing means (36) comprise a seal (74), which is pressed by the advance of the actuating means (42) against an opening (28) of the filling duct (16).

13. Filling device (10) for filling a fluid reservoir (12) with a fluid, **characterised in that** the filling device comprises a device (30) according to any one of the preceding claims.

## Revendications

1. Dispositif (30) pour coupler un système de remplissage (10) à un canal de remplissage (16) d'un réservoir de fluide (12), comprenant des moyens de fixation (40) pour fixer de manière amovible le système de remplissage (10) par rapport au réservoir de fluide (12), des moyens d'étanchéité (36) pour étanchéifier le canal de remplissage (16) par rapport à l'environnement, ainsi que des moyens d'actionnement (42) mobiles linéairement, par l'avancement desquels les moyens de fixation (40) peuvent être amenés en prise avec une paroi (20) généralement cylindrique entourant le canal de remplissage (16), dans lequel les moyens de fixation (40) comprennent une bague de serrage (44) et dans lequel lors de l'avancement, les moyens d'actionnement (42) poussent la bague de serrage (44) contre une butée (50) du dispositif, ce qui a pour effet que la bague de serrage (44) entre en prise avec la paroi (20) en modifiant son diamètre, **caractérisé en ce que** la bague de serrage (44) est réalisée en une partie, consiste en une matière plastique élastiquement déformable et est pourvue dans la direction périphérique d'une unique interruption (46), et que la bague de serrage (44), lors de la rétraction des moyens d'actionnement (42), se désengage de la paroi (20) de manière autonome par une redéformation élastique.

2. Dispositif (30) selon la revendication 1, **caractérisé en ce que** la bague de serrage (44) présente au moins une nervure (54) débordant en direction de la paroi (20) pour venir en prise avec un filetage (22, 24) formé dans la paroi (20) ou pour venir en prise par l'arrière avec un collet débordant de la paroi (20).

3. Dispositif (30) selon l'une quelconque des revendications précédentes, **caractérisé en ce que** la bague de serrage (44) d'une part et les moyens d'actionnement (42) et/ou la butée (50) d'autre part présentent des surfaces coniques (52, 90 ; 52, 108) qui coopèrent.

4. Dispositif (30) selon la revendication 3, **caractérisé en ce que** les surfaces coniques (52, 90 ; 52, 108) qui coopèrent de la bague de serrage (44) et des moyens d'actionnement (42) et/ou de la butée (50) sont réalisées en tant qu'un cône intérieur ou extérieur complémentaire.

5. Dispositif (30) selon la revendication 3 ou 4, **caractérisé en ce qu'**une des surfaces coniques (52, 90 ; 52, 108) qui coopèrent consiste en plusieurs sections de surface (90 ; 108) séparées disposées à distance les unes des autres dans la direction périphérique.

6. Dispositif (30) selon la revendication 5, **caractérisé en ce que** l'aire surfacique des sections de surface (90 ; 108) séparées conjointement est inférieure à 80 % de l'aire surfacique de l'autre (52) des surfaces coniques (52, 90 ; 52, 108) qui coopèrent.

7. Dispositif (30) selon la revendication 5 ou 6, **caractérisé en ce que** des chanfreins (92) jouxtent les extrémités opposées des sections de surface séparées (90 ; 108).

8. Dispositif (30) selon l'une quelconque des revendications précédentes, **caractérisé en ce que** la butée (50) est stationnaire par rapport à un boîtier (38) du dispositif (30).

9. Dispositif (30) selon l'une quelconque des revendications 1 à 8, **caractérisé en ce que** la bague de serrage (44) peut être amenée en prise depuis l'extérieur avec la paroi (20) en réduisant son diamètre, et que dans l'état non déformé de la bague de serrage (44), l'interruption (46) s'étend sur un angle périphérique supérieur à 20 degrés.

10. Dispositif (30) selon la revendication 9, **caractérisé en ce que** les extrémités, adjacentes à l'interruption (46), de la bague de serrage (44) sont pourvues de biseaux (58) qui convergent en direction de l'avancement des moyens d'actionnement (42).

11. Dispositif (30) selon l'une quelconque des revendications 1 à 8, **caractérisé en ce que** la bague de serrage (44) peut être amenée en prise depuis l'intérieur avec la paroi (20) en agrandissant son diamètre, et que dans l'état déformé de la bague de serrage (44), l'interruption (46) s'étend sur un angle périphérique supérieur à 30 degrés.

12. Dispositif (30) selon l'une quelconque des revendications précédentes, **caractérisé en ce que** les moyens d'étanchéité (36) comprennent un joint d'étanchéité (74), qui est pressé par l'avancement des moyens d'actionnement (42) contre une embouchure (28) du canal de remplissage (16).

13. Dispositif de remplissage (10) pour remplir un réservoir de fluide (12) avec un fluide, **caractérisé en ce que** le système de remplissage comprend un dispositif (30) selon l'une quelconque des revendications précédentes.
